# EUROPEAN PATENT SPECIFICATION

(11) **EP 4 494 829 B1**
(45) Date of publication and mention of the grant of the patent: **15.04.2026**
(21) Application number: 23790881.9
(22) Date of filing: 24.02.2023
(51) Int. Cl.: B28D 1/08, B23D 57/00

(54) **A FOUR-PILLAR AND FOUR-GUIDE WHEEL JACKING TYPE MULTI-WIRE CUTTING MACHINE FOR A LARGE-SIZED STONE SLAB**
MEHRDRAHT-SCHNEIDEMASCHINE VOM HUBTYP MIT VIER SÄULEN UND VIER FÜHRUNGSRÄDERN FÜR EINE GROSSE STEINPLATTE
MACHINE DE COUPE MULTIFIL DE TYPE À LEVAGE, À QUATRE PILIERS ET À QUATRE ROUES GUIDES POUR DALLE DE PIERRE DE GRANDE TAILLE

(30) Priority: 18.04.2022 CN 202210406677
(43) Date of publication of application: 22.01.2025
(73) Proprietor: XIAMEN PINHE PRECISION TECHNOLOGY CO., LTD., Xiamen, Fujian 361101 (CN)
(72) Inventor: LIN, Peilin, Xiamen, Fujian 361101 (CN); WANG, Ruoyu, Xiamen, Fujian 361101 (CN); ZHANG, Qijin, Xiamen, Fujian 361101 (CN)
(74) Representative: Bayramoglu et al.
(86) International application number: PCT/CN2023/078094
(87) International publication number: WO 2023/202218

(56) References cited:
- EP-A1- 0 767 036
- EP-A1- 3 603 914
- EP-B1- 1 937 436
- CN-A- 109 927 188
- CN-A- 111 745 832
- CN-A- 111 745 832
- CN-A- 111 745 833
- CN-A- 114 654 591
- CN-U- 204 382 511
- CN-U- 209 425 923
- CN-U- 209 699 606
- CN-U- 217 395 341
- US-B2- 7 770 575

## Description

### TECHNICAL FIELD

The present disclosure relates to the field of stone cutting, and in particular to a cutting device of a multi-wire cutting machine for a large-sized stone slab and the multi-wire cutting machine.

### BACKGROUND TECHNOLOGY

Diamond wire is a cutting tool made by electroplating diamond on the outer layer of a steel wire. At present, diamond wire is widely used in cutting photovoltaic silicon wafers, sapphire, graphite, magnetic materials, etc. In these fields where diamond wire cutting has become popular, the processing objects are artificial materials, with uniform textures, uniform specifications, and small sizes. The length, width, and height dimensions of the cutting object are generally less than 500 mm * 500 mm * 300 mm, and the cross-sectional area of the cut product is less than 300 mm * 300 mm. The diameter of the diamond wire used is generally 0.03-0.2 mm, and the working tension of diamond wires with different diameters is 3-30 N, with a cutting stroke of generally less than 400 mm. Currently, different types of multi-wire cutting machines feature a main roller with a small diameter (100-200 mm) and a small length (400-900 mm), a winding wheel with an outer diameter of less than 250 mm, and a small guide wheel with a diameter of less than 150 mm.

Traditional stone cutting is generally carried out using tools with alloy bits, such as saw blades, rope saws, and band saws. Due to the hard alloy with a certain thickness, traditional cutting tools will form kerfs ranging within 3-10 mm during the process of stone cutting. In addition, hard alloy cutting tools will come into rigid contact with the stone during processing, causing significant vibration and easily leading to stone breakage. Therefore, hard alloy cutting tools can generally only process slabs with a thickness exceeding 10 mm. The diamond wire is in flexible contact with the stone, with no instantaneous impact load, low vibration, low noise, and has a small diameter, ensuring that the kerf is less than 1 mm. Therefore, the diamond wire can greatly improve the yield, and can directly process a raw stone into a thin slab with a thickness of less than 5 mm without causing the stone to break during the cutting process. The extracted natural stones have many special features. First, they are not uniform in size, and are generally large in size and weight. Generally, a raw stone exceeds 20 tons, with its length, width, and height dimensions exceeding 3,000 * 2,000 * 2,000 mm, and can yield a large-sized stone slab with a cross-sectional area reaching 3,000 mm * 2,000 mm. Furthermore, the Mohs hardness of stones ranges from scale 2 to scale 9, and varies greatly in different types of stones. The textures at different locations of the same raw stone are different. In addition, the natural stone itself has cracks and holes, resulting in very complex textures. Therefore, the diamond wire is prone to breakage during the process of cutting the stone. Once the wire is broken, due to the small kerf of the diamond wire, the cut stones will deform due to internal stress or be adsorbed together by the tension of the cooling water. As a consequence, it will be impossible to re-wire and cut the stone, resulting in half of the cut stone being scrapped and causing losses. To achieve good results in stone cutting with a diamond wire, it is necessary to increase the wire diameter so as to reduce the breakage rate of the diamond wire during the cutting process. However, a large diameter requires a large tension of the diamond wire. A raw stone weighs 20-30 tons, and can yield over 500 m² of slabs by one-time processing. Stones have strong abrasiveness. The consumption of diamond wires per unit area required for one cut is much greater than that for cutting small-sized artificial materials. Therefore, processing a large-sized raw stone at once requires a winding wheel with a large wire storage capacity. In addition, the large-sized raw stone requires a span exceeding 2,000 mm between the main rollers, which makes it difficult to dissipate the accumulated heat generated by friction during the cutting process and to discharge the stone powder. Therefore, a large amount of cooling water is needed to cool the diamond wire and flush away the cut material. However, the high-pressure cooling water and stone powder generated during high-speed cutting pose high requirements for the waterproof performance of the bearing box.

In the field of stone processing, usually, the length, width, and height dimensions of raw stones are greater than 3,000 * 2,000 * 2,000 mm, and the cross-sectional area of cut products exceeds 3,000 * 2,000 mm. During the cutting process, only one cutting mesh surface of the diamond wire can contact the workpiece. Therefore, the optimal structure is a cutting mesh surface formed by four parallel rollers. Meanwhile, the diamond wire suitable for stone processing should have a diameter exceeding 0.3 mm and a working tension exceeding 60 N.

Chinese utility model patent 201520035317.9 with publication number CN204382511U discloses a multi-wire cutting machine for marble, including a base, and a workbench and a mounting seat located on the base. The mounting seat is located above the workbench, and the marble to be cut is fixed to the workbench. At least one of the workbench and the mounting seat is provided on the base and can be raised and lowered. The mounting seat is provided with multiple winding rollers that can rotate around their own axis and a cutting steel wire that is sequentially wound around the winding rollers to form multiple cutting wires. All the cutting wires on each winding roller are distributed at intervals along the length extension direction of the winding roller. The mounting seat is further provided with take-up and pay-off mechanisms for taking up and paying off the steel wire and a cutting driving mechanism for driving at least one winding roller to rotate and drive the cutting wire to reciprocate. There are four winding rollers. Sequentially, the steel wire is led out from a wire groove of the first winding roller, enters a wire groove of the second winding roller, enters a wire groove of the third winding roller, enters a wire groove of the fourth winding roller, and enters a subsequent wire groove of the first winding roller. In this way, the steel wire is cyclically tensioned on the peripheries of the four winding rollers to form the cutting wires. The mounting seat is further provided with a roller frame. The winding roller includes one end rotatably provided on the mounting seat and the other end rotatably provided on the roller frame. The roller frame is in an "H" shape.

The multi-wire cutting machine for marble has the following disadvantages. 1) The roller frame is a cantilever structure as a whole. The cantilever structure requires a long guide wheel during the cutting of a large-sized stone, resulting in a heavy cutting assembly. In addition, the cantilever structure features a long force arm and a support point stressed at one sided force, making the roller frame unstable and prone to resonance and shaking. 2) The pay-off mechanism leads the wire in from one of the two lower winding rollers, while the take-up mechanism leads the wire out from the other of the two winding rollers. The diamond wire arranged between the two lower winding rollers forms a cutting mesh surface. The cutting mesh surface is a working surface for cutting the stone. The two ends of the diamond wire are connected to the pay-off mechanism and the take-up mechanism, respectively, such that the two ends of the diamond wire directly participate in the work of cutting the stone. Thus, the diamond wire has large fluctuations and is easy to break. In addition, the dust and water vapor generated by the diamond wire and the stone during the cutting process are easily carried into the take-up and pay-off mechanisms by the diamond wire, which can easily cause electrical faults and affect the operation of the two mechanisms. 3) Due to the heavy weight of the winding rollers, it is necessary to use a hoist for lifting the winding rollers for disassembly. The roller frame is in an "H" shape, with the two winding rollers on the same side distributed above and below the crossbar in the middle of the roller frame. Due to the obstruction of the middle crossbar, it is difficult to lift the winding rollers below, making it inconvenient for disassembly. 4) The cantilever-type cutting assembly moves up and down for cutting. Specifically, while the H-shaped cutting assembly moves as a whole for cutting, it carries the weights of the winding rollers and cutting force, resulting in poor overall stability, easy breakage, and uneven cutting surface. US7770575B2 discloses a multiwire sawing machine as per the preamble of appended claim 1 for the cutting of material in block form, e.g. stone material. The sawing machine comprises a double portal structure with two pairs of uprights, along which slides a respective ram. The rams bear four support shafts, superposed in pairs and each supporting a coaxial roller, respectively a plurality of coaxial pulleys, mutually juxtaposed in packet fashion, having coplanar races according to respective vertical planes. A shaft rotates integrally with the respective roller, or with the respective packet of pulleys. The other rollers, or packets of pulleys are idle. On sets of four coplanar races is wound a corresponding wire or cutting tool in closed loop, to execute the cut in a corresponding vertical plane of a block of material.

### CONTENT OF THE INVENTION

In response to the above drawbacks, an objective of the present disclosure is to provide a jack-up multi-wire cutting machine with four pillars and four guide wheels for a large-sized stone slab. The present disclosure solves the problems of insufficient stability of the cutting machine, easy breakage of the diamond wire, and the water vapor affecting the take-up and pay-off mechanisms during the cutting of large-sized stone slabs.

A technical solution adopted by the present disclosure is as presented in the appended claims.

The cutting machine adopts a jack-up type, that is, the cutting assembly is located on the frame, and the jack-up mechanism is located on the base. The cutting assembly above is independently separated from the jack-up mechanism below. The vibration generated by cutting is absorbed by the base and the ground, ensuring good stability performance. The cutting machine adopts an upper leading-in and upper leading-out format. The diamond wire wound around the first main guide wheel and the second main guide wheel above and then enters the third main guide wheel and the fourth main guide wheel. The first main guide wheel and the second main guide wheel play a buffering role. The diamond wire does not directly participate in cutting after coming out of the first take-up and pay-off mechanism and the second take-up and pay-off mechanism, so the diamond wire has small fluctuations and is not easily broken. In addition, the dust and water vapor generated by the diamond wire and the stone during the cutting process are not easily carried into the second take-up and pay-off mechanism and the first take-up and pay-off mechanism by the diamond wire. The four main guide wheels are parallel, and the four main guide wheels can support a large cutting chamber and adapt to cutting stones of various sizes and shapes.

### DESCRIPTION OF THE DRAWINGS

FIG. 1 is a structural diagram according to an embodiment of the present disclosure;
FIG. 2 is a structural diagram of a cutting assembly and a frame according to an embodiment of the present disclosure;
FIG. 3 is a structural diagram of the frame according to an embodiment of the present disclosure;
FIG. 4 is a schematic diagram in a use state according to an embodiment of the present disclosure;
FIG. 5 is a structural diagram of a base and a jack-up mechanism according to an embodiment of the present disclosure;
FIG. 6 is a structural diagram of a first take-up and pay-off mechanism according to an embodiment of the present disclosure;
FIG. 7 is a structural diagram of the first take-up and pay-off mechanism in a use state according to an embodiment of the present disclosure;
FIG. 8 is a structural diagram of a wiring mechanism according to an embodiment of the present disclosure;
FIG. 9 is an enlarged view of F shown in FIG. 6;
FIG. 10 is a structural diagram of a main guide wheel according to an embodiment of the present disclosure; and
FIG. 11 is a structural diagram of a main bearing box according to an embodiment of the present disclosure.

Reference Numerals: 1. base; 11. upper layer; 12. lower layer; 13. upright abutment; 2. frame; 21. first pillar; 22. second pillar; 23. third pillar; 24. fourth pillar; 25. first longitudinal back plate; 26. second longitudinal back plate; 27. first crossbeam; 28. second crossbeam; 3. cutting assembly; 31. diamond wire; 32. first take-up and pay-off mechanism; 321. take-up and pay-off wheel; 322. wheel driving component; 323. wire arranging wheel; 324. wire arranging device; 325. tension wheel; 326. tension adjusting device; 327. wire incoming and outgoing wheel; 328. wiring mechanism; 3281. longitudinal screw; 3282. longitudinal guide rod; 3283. sliding plate; 32831. arc-shaped adjustment hole; 3284. screw driving component; 3285. connecting plate; 33. second take-up and pay-off mechanism; 34. first main guide wheel; 341. wire groove; 35. second main guide wheel; 36. third main guide wheel; 37. fourth main guide wheel; 38. guide wheel driving mechanism; 4. jack-up mechanism; 41. lifting platform; 42. lifting mechanism; 421. T-shaped screw; 422. lifting guide rail; 43. lifting driving device; 5. inspection port; A. outgoing point of wire arranging wheel; B. incoming point of tension wheel; C. outgoing point of tension wheel; D. incoming point of wire incoming and outgoing wheel; E. outgoing point of incoming and outgoing wheel; a. stone; b. first cutting mesh surface; c1. guide wheel body; c13. receiving chamber; c14. receiving chamber; c3. plug; c4. plug; d. main bearing box; d1. main shaft; d2. outer shell; d3. front end cover; d4. rear end cover; d5. bearing; e. auxiliary bearing box; e1. main shaft; and f. connecting gap.

### SPECIFIC IMPLEMENTATIONS

The present disclosure is described in detail below with reference to the drawings.

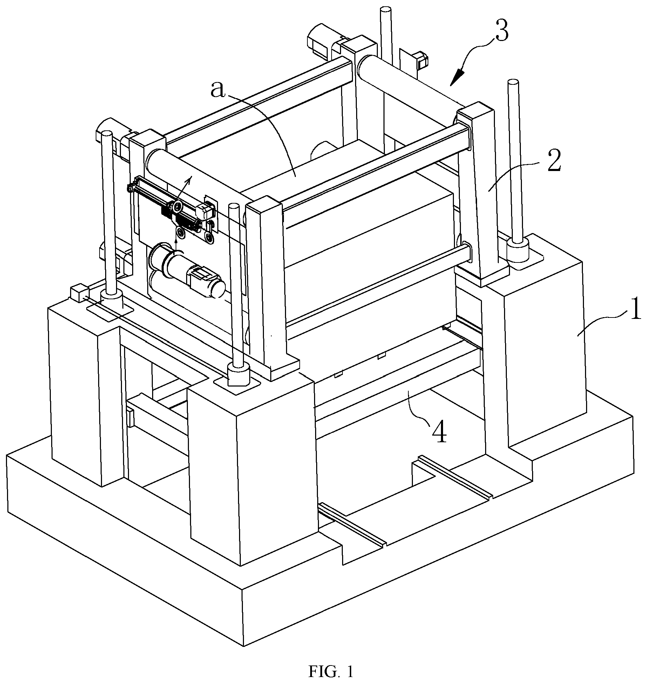

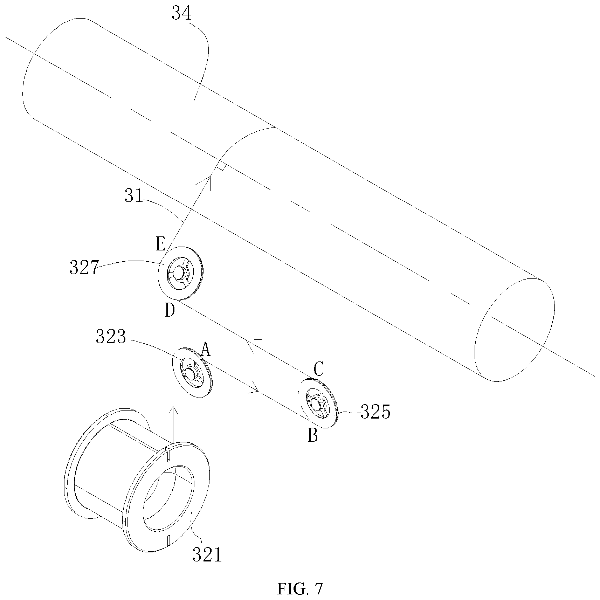

An embodiment relates to a jack-up multi-wire cutting machine with four pillars and four guide wheels for a large-sized stone slab. As shown in FIGS. 1 to 9, the jack-up multi-wire cutting machine includes base 1 and frame 2 located above the base 1. The frame 2 is provided with cutting assembly 3. The base 1 is provided with jack-up mechanism 4 located below the cutting assembly 3 and movable to lift stone a to be cut by the cutting assembly 3.

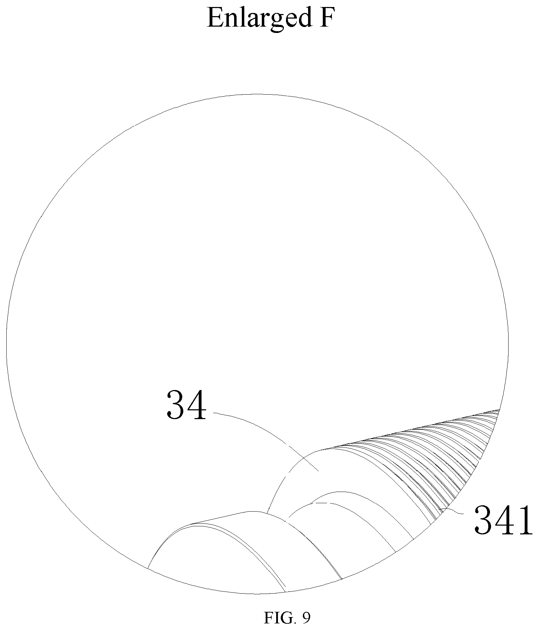

The cutting assembly 3 includes diamond wire 31, first take-up and pay-off mechanism 32, second take-up and pay-off mechanism 33, first main guide wheel 34, second main guide wheel 35, third main guide wheel 36, fourth main guide wheel 37, and guide wheel driving mechanisms 38. The four main guide wheels extend longitudinally in horizontal direction, with respective axial ends rotatably connected to the frame 2. The first main guide wheel 34 and the second main guide wheel 35 are located at a same height, and the third main guide wheel 36 and the fourth main guide wheel 37 are located at a same height. The first main guide wheel 34 is located above the fourth main guide wheel 37, and the second main guide wheel 35 is located above the third main guide wheel 36. The guide wheel driving mechanisms 38 are connected to the four main guide wheels respectively to drive the main guide wheels to rotate. The first take-up and pay-off mechanism 32 and the second take-up and pay-off mechanism 33 are provided on the frame 2 and respectively connected to two ends of the diamond wire 31. One end of the diamond wire 31 is led out from the first take-up and pay-off mechanism 32, led in from the first main guide wheel 34, repeatedly wound around the four main guide wheels sequentially in a direction of the first main guide wheel 34, the second main guide wheel 35, the third main guide wheel 36, and the fourth main guide wheel 37, and led out from the second main guide wheel 35. The diamond wire 31 forms first cutting mesh surface b for cutting the stone a, including multiple parallel and spaced cutting wires, between bottoms of the third main guide wheel 36 and the fourth main guide wheel 37. As shown in FIG. 9, the main guide wheel is provided with three wire grooves 341 for winding the diamond wire.

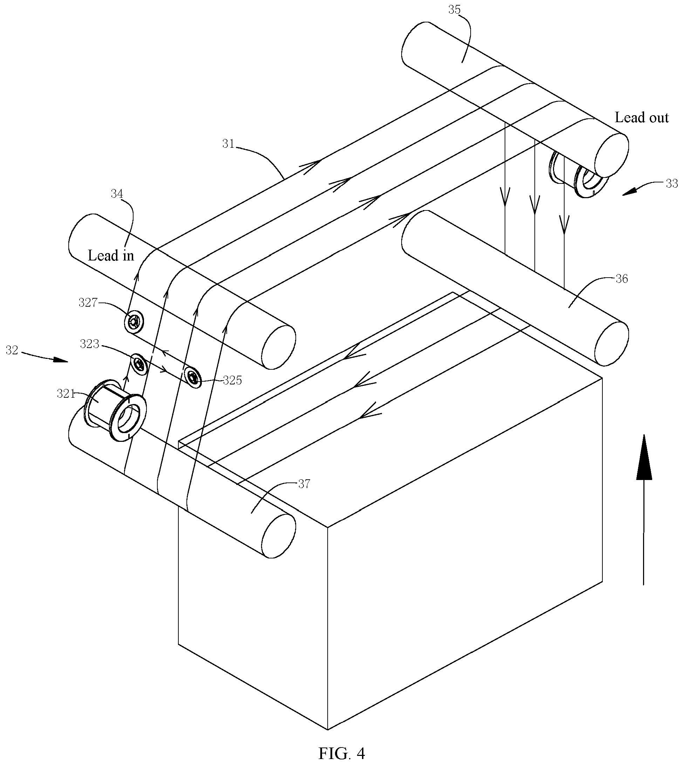

As shown in FIGS. 1 and 4, the cutting machine adopts a jack-up type, that is, the cutting assembly is located on the frame, and the jack-up mechanism is located on the base. The cutting assembly above is independently separated from the jack-up mechanism below. The vibration generated by cutting is absorbed by the base and the ground, ensuring good stability performance. The cutting machine adopts an upper leading-in and upper leading-out structure. The diamond wire wound around the first main guide wheel and the second main guide wheel above and then enters the third main guide wheel and the fourth main guide wheel. The first main guide wheel and the second main guide wheel play a buffering role. The diamond wire does not directly participate in cutting after coming out of the first take-up and pay-off mechanism and the second take-up and pay-off mechanism, so the diamond wire has small fluctuations and is not easily broken. In addition, the dust and water vapor generated by the diamond wire and the stone during the cutting process are not easily carried into the second take-up and pay-off mechanism and the first take-up and pay-off mechanism by the diamond wire. The four main guide wheels are parallel, and the four main guide wheels can support a large cutting chamber and adapt to cutting stones of various sizes and shapes.

As a further improvement, as shown in FIGS. 1 to 4, the frame 2 includes first pillar 21, second pillar 22, third pillar 23, and fourth pillar 24 that are fixed vertically to the base 1. The first pillar 21 and the second pillar 22 are respectively located at two longitudinal ends of one transverse side of the base 1, while the third pillar 23 and the fourth pillar 24 are respectively located at two longitudinal ends of the other transverse side of the base 1. First longitudinal back plate 25 located outside the first pillar 21 and the second pillar 22 is fixedly connected between the first pillar and the second pillar. Second longitudinal back plate 26 located outside the third pillar 23 and the fourth pillar 24 is fixedly connected between the third pillar and the fourth pillar. First crossbeam 27 is fixedly connected between the first pillar 21 and the fourth pillar 24, and second crossbeam 28 is fixedly connected between the second pillar 22 and the third pillar 23.

Two axial ends of each of the first main guide wheel 34 and the fourth main guide wheel 37 are respectively rotatably connected to the first pillar 21 and the second pillar 22. Two axial ends of the second main guide wheel 35 and the third main guide wheel 36 are respectively rotatably connected to the third pillar 23 and the fourth pillar 24. The first take-up and pay-off mechanism 32 is provided at an upper part of the first longitudinal back plate 25, and the second take-up and pay-off mechanism 33 is provided at an upper part of the second longitudinal back plate 26.

The frame 2 can be cast or assembled as a whole. The first crossbeam 27 and the second crossbeam 28 can be structures similar to crossbeams, such as triangular brackets, top covers, or back panels. The first longitudinal back plate 25 and the second longitudinal back plate 26 can be structures similar to crossbeam supports and triangular supports.

Preferably, the first crossbeam 27 and the second crossbeam 28 are located at an upper part of the four pillars, and a sprinkler system is provided on the first crossbeam 27 and the second crossbeam 28.

The diamond wire has a high tension of several tens of kilograms. If hundreds of diamond wires are wound around four guide wheels, the tension will reach several tons. Due to the large size of the cut stone, the size of the main guide wheel needs to be very large. If the size of the main guide wheel is large, the force arm of the main guide wheel needs to be very large. The four pillars are combined with the longitudinal back plates and crossbeams to form a frame structure. The back plate and crossbeam are close to the direction of force on the wire mesh, and the force arm is short, which can have a good stress effect. Each beam or pillar not only bears the force, but also plays other roles. The first crossbeam 27 and the second crossbeam 28 support the sprinkler system. The second longitudinal back plate 26 and the first longitudinal back plate 25 bear the longitudinal beams and can also be used to mount the take-up and pay-off mechanisms. The pillar is used to transmit force. The four pillars are directly fixed to the base, and the vibration generated during cutting is transmitted to the ground through the base, unlike the cantilever structure that generates long a force arm that affects stability. The second longitudinal back plate 26 and the first longitudinal back plate 25 are located outside the pillars. There is no obstruction between the upper and lower main guide wheels, making it easy to operate when lifting the main guide wheels.

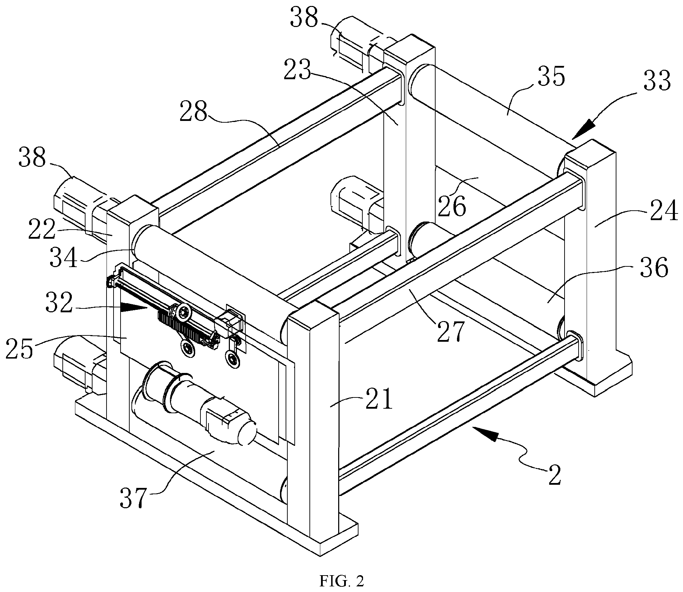

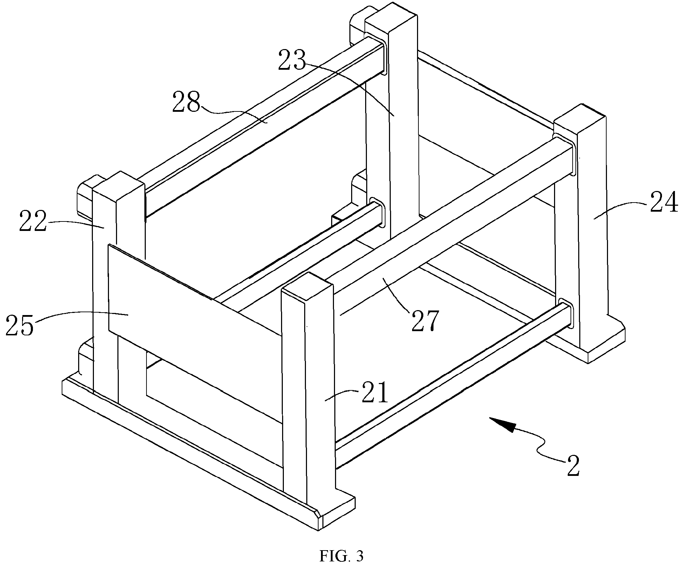

As a further improvement, as shown in FIGS. 2 and 3, inspection port 5 is located below the first longitudinal back plate 25 and the second longitudinal back plate 26. Due to the inspection port below the longitudinal back plate, it is convenient for personnel to disassemble and maintain the longitudinal back plate. The inspection port can also be formed by digging a hole on the back plate.

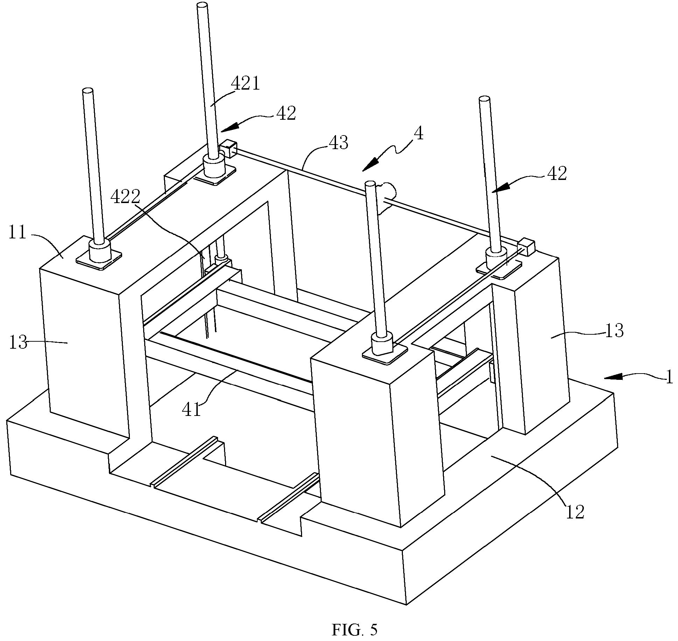

As a further improvement, as shown in FIGS. 1 and 5, the base 1 includes upper layer 11, lower layer 12, and four upright abutments 13 connected between the upper layer 11 and the lower layer 12. The four upright abutments 13 are respectively located at the longitudinal ends of the transverse sides of the base 1.

The jack-up mechanism 4 includes lifting platform 41 located between the four upright abutments 13 for placing the stone, four lifting mechanisms 42 for lifting the lifting platform 41, and lifting driving device 43 for driving the four lifting mechanisms 42 to move synchronously. Each of the lifting mechanisms 42 includes vertical T-shaped screw 421 and lifting guide rail 422. The T-shaped screw 421 is rotatably connected to the upper layer 11 and the lower layer 12, and is threaded with the lifting platform 41. The lifting guide rail 422 is provided on the corresponding upright abutment 13 and vertically slidably connected to the lifting platform 41. A center of the upper layer 11 is provided with a channel for the stone a lifted by the lifting platform 41 to pass through. The frame 2 is fixed to the upper layer 11.

The base and the jack-up mechanism form a lower part of the cutting machine. The base is formed by the upper layer, the lower layer, and the four upright abutments. The lower layer directly contacts the ground, while the upper layer is configured to mount the frame and the cutting assembly. The operator can walk on the upper layer, making it convenient for maintenance, overall stable, and cost-effective. The four guide rails 422 of the four lifting mechanisms 42 are respectively arranged on the four upright abutments, which are easy to mount and have good stress resistance.

Furthermore, the base 1 is made of reinforced concrete. The base 1 made of reinforced concrete has low cost and can be manufactured in sections. It can also be welded with steel plates, or made of castings or steel plates with fillers.

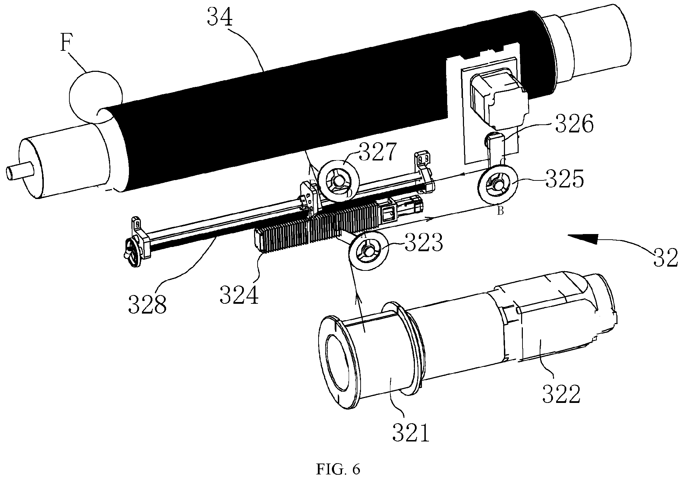

As a further improvement, as shown in FIGS. 6 to 8, the first take-up and pay-off mechanism 32 and the second take-up and pay-off mechanism 33 each include take-up and pay-off wheel 321, wheel driving component 322 for driving the take-up and pay-off wheel 321 to rotate, wire arranging wheel 323 located at a side of the take-up and pay-off wheel 321, wire arranging device 324 for driving the wire arranging wheel 323 to move longitudinally, tension wheel 325 located at a longitudinal side of the wire arranging wheel 323, tension adjusting device 326 for driving the tension wheel 325 to move, wire incoming and outgoing wheel 327 located above the wire arranging wheel 323, and wiring mechanism 328 for driving the wire incoming and outgoing wheel 327 to move longitudinally. Outgoing point A of the wire arranging wheel 323, incoming point B of the tension wheel 325, outgoing point C of the tension wheel 325, and incoming point D of the wire incoming and outgoing wheel 327 are coplanar. The diamond wire located between outgoing point E of the wire incoming and outgoing wheel 327 and an incoming point of the first main guide wheel 34 is perpendicular to an axis of the first main guide wheel 34 or an axis of the second main guide wheel 35. One end of the diamond wire 31 is connected to the take-up and pay-off wheel 321, sequentially wound around the wire arranging wheel 323, the tension wheel 325, and the wire incoming and outgoing wheel 327, and is connected to the corresponding main guide wheel. Preferably, the tension adjusting device 326 is configured to control the tension wheel 325 to swing longitudinally around a circumference.

In order to achieve the reciprocating operation of the multi-wire cutting machine and provide a stable tension to ensure cutting and avoid breakage, the turning radius of the small guide wheel is small, so the diamond wire is prone to twisting and jumping. Therefore, fewer small guide wheels indicate a shorter wiring distance, making the diamond wire less likely to breakage and wear during the wiring process. Meanwhile, fewer small guide wheels lead to a lower usage cost and a lower failure rate. The cutting machine adopts three guide wheels for wiring, reducing the number of components and reducing the failure rate.

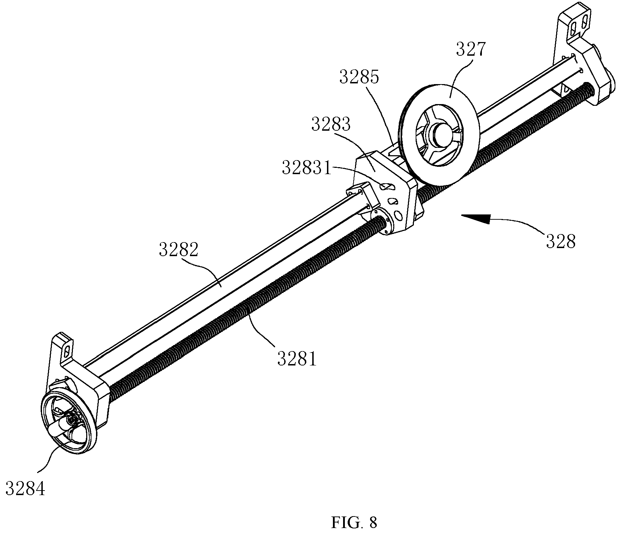

Preferably, as shown in FIG. 8, the wiring mechanism 328 includes longitudinal screw 3281 and longitudinal guide rod 3282 fixedly provided on the first longitudinal back plate 25 or the second longitudinal back plate 26 and extending longitudinally, sliding plate 3283 threaded with the longitudinal screw 3281 and slidably fitted with the longitudinal guide rod 3282, and screw driving component 3284 for driving the longitudinal screw 3281 to rotate. The sliding plate 3283 is provided with arc-shaped adjustment hole 32831 that vertically penetrates the sliding plate 3283 in parallel with the longitudinal screw 3281 and extends in an arc shape on the sliding plate 3283. A center line of the arc-shaped adjustment hole 32831 is parallel to an extension direction of the longitudinal screw 3281. The wire incoming and outgoing wheel 327 is rotatably connected to connecting plate 3285, with a rotation center line perpendicular to the extension direction of the longitudinal screw 3281. The connecting plate 3285 is adjustably fixed to the sliding plate 3283 through a bolt inserted into the arc-shaped adjustment hole 32831. The wiring mechanism can adjust the longitudinal position of the wire incoming and outgoing wheel to adapt to the cutting of stones of different sizes.

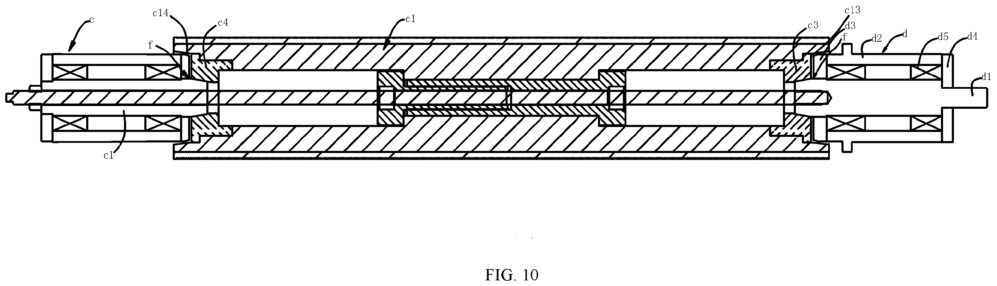

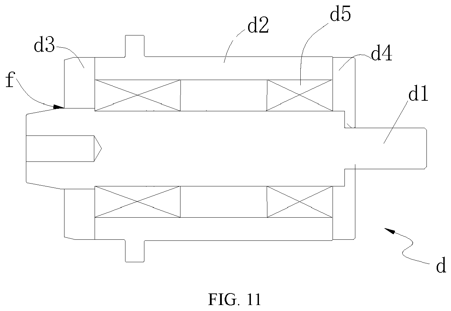

Furthermore, as shown in FIGS. 10 and 11, the first main guide wheel 34, the second main guide wheel 35, the third main guide wheel 36, and the fourth main guide wheel 37 each include guide wheel body c1. Two axial ends of the guide wheel body c1 are coaxially fixedly provided therein with plugs c3 and c4 for connecting main bearing box d or auxiliary bearing box e. The guide wheel body c1 is preinstalled with receiving chambers c13 and c14 at an axial side of the two plugs c3 and c4. An axial end of the main bearing box d and an axial end of the auxiliary bearing box e can be partially plugged into the two corresponding receiving chambers c13 and c14. Connecting gaps f located at relative movement points between main shafts d1 and e1 of the main bearing box and the auxiliary bearing box and front end covers close to the centering plugs c3 and c4 are accommodated in the two receiving chambers c13 and c14, respectively.

The structures of the main bearing box and the auxiliary bearing box are similar. As shown in FIG. 11, the main bearing box d mainly includes the main shaft d1, outer shell d2, bearing d5 located between the main shaft d1 and the outer shell d2, and front end cover d3 and rear end cover d4 for sealing front and rear sides of the outer shell d2. The front side is a side of the main bearing box close to the main guide wheel. The front end cover b3, the rear end cover d4, and the outer shell d2 are fixed together and located on the frame. The main shaft d1 is located rotatably relative to an external shell component. Since the main shaft d1 is rotatable relative to the front end cover d3 and the main shaft d1 rotates fast, it is hard to form an effective seal of the connecting gap f at the relative movement point between the main shaft d1 and the front end cover d3 through a conventional method such as a sealing ring or a maze. In addition, since the connecting gap f is close to the main guide wheel, the cooling water sprayed by the sprinkler system directly acts on the main guide wheel. The cooling water and dust are directly flushed into the connecting gap d, and a large amount of cold water enters the bearing box, which can easily cause bearing failure.

Since the main guide wheel is provided therein with the receiving chamber to accommodate the bearing box and hide the connecting gap, the cooling water will not be flushed directly, providing a sealing effect similar to a maze and good waterproof effect. Besides, the plug is closer to the support point of the main guide wheel. In other words, for a 1-meter guide wheel, the support point is at a position of 0.8 meters, resulting in better stress resistance. In the embedded design of the bearing box, the internal chambers at the two ends of the main guide wheel are hollowed out, achieving a lightweight effect and reducing the weight of the guide wheel.

The working principle and process of this embodiment are as follows. The stone a is placed on the lifting platform 41 of the jack-up mechanism 4, and the four lifting mechanisms 42 drive the stone to gradually rise. The four main guide wheels of the cutting assembly 3 are driven by their respective guide wheel driving mechanisms 38 to repeatedly rotate forward and backward, causing the first cutting mesh surface b to repeatedly saw the stone a until the stone cutting is completed. During the working process, the first take-up and pay-off mechanism 32 of the cutting assembly 3 continuously provides new diamond wire 31 to the main guide wheel. The second take-up and pay-off mechanism 33 continues to collect the damaged diamond wire into a roll.

## Claims

1. A four-pillar and four-guide wheel jacking type multi-wire cutting machine for a large-sized stone slab, comprising a base (1) and a cutting device, wherein the cutting device comprises a frame (2), wherein the frame (2) is located on the base (1) and provided with a cutting assembly (3); the cutting assembly (3) comprises a diamond wire (31), a first main guide wheel (34), a second main guide wheel (35), a third main guide wheel (36), and a fourth main guide wheel (37); the four main guide wheels extend longitudinally in horizontal direction, with respective axial ends rotatably connected to the frame (2); the first main guide wheel (34) and the second main guide wheel (35) are located at a same height, and the third main guide wheel (36) and the fourth main guide wheel (37) are located at a same height; the first main guide wheel (34) and the second main guide wheel (35) are located above the fourth main guide wheel (37) and the third main guide wheel (36), respectively; and the diamond wire (31) is repeatedly wound around the four main guide wheels to form a first cutting mesh surface for cutting a stone, comprising multiple parallel and spaced cutting wires, between bottoms of the third main guide wheel (36) and the fourth main guide wheel (37); wherein the frame (2) comprises a first pillar (21), a second pillar (22), a third pillar (23), and a fourth pillar (24); the first pillar (21) and the second pillar (22) are respectively located at two longitudinal ends of one transverse side, while the third pillar (23) and the fourth pillar (24) are respectively located at two longitudinal ends of the other transverse side; wherein a first crossbeam (27) is fixedly connected between the first pillar (21) and the fourth pillar (24), and a second crossbeam (28) is fixedly connected between the second pillar (22) and the third pillar (23); wherein the axial ends of the first main guide wheel (34) and the fourth main guide wheel (37) are rotatably connected to the first pillar (21) and the second pillar (22) respectively, and the axial ends of the second main guide wheel (35) and the third main guide wheel (36) are rotatably connected to the third pillar (23) and the fourth pillar (24), respectively; and
**characterized in that** the base (1) is provided with a jack-up mechanism (4) located below the cutting assembly (3) and movable to lift the stone to be cut by the cutting assembly (3); **in that** a first longitudinal back plate (25) located outside the first pillar (21) and the second pillar (22) is fixedly connected between the first pillar (21) and the second pillar (22); **in that** a second longitudinal back plate (26) located outside the third pillar (23) and the fourth pillar (24) is fixedly connected between the third pillar (23) and the fourth pillar (24); and **in that**
the cutting assembly (3) further comprises a first take-up and pay-off mechanism (32), a second take-up and pay-off mechanism (33), and guide wheel driving mechanisms (38), wherein the guide wheel driving mechanisms (38) are connected to the four main guide wheels respectively to drive the main guide wheels to rotate; the first take-up and pay-off mechanism (32) is located at one transverse side of the frame (2), and the second take-up and pay-off mechanism (33) is located at the other transverse side of the frame (2); the first take-up and pay-off mechanism (32) and the second take-up and pay-off mechanism (33) each comprise a take-up and pay-off wheel (321), a wheel driving component (322) for driving the take-up and pay-off wheel (321) to rotate, a wire arranging wheel (323) located at a side of the take-up and pay-off wheel (321), a wire arranging device (324) for driving the wire arranging wheel (323) to move longitudinally, a tension wheel (325) located at a longitudinal side of the wire arranging wheel (323), a tension adjusting device (326) for driving the tension wheel (325) to move, a wire incoming and outgoing wheel (327) located above the wire arranging wheel (323), and a wiring mechanism (328) for driving the wire incoming and outgoing wheel (327) to move longitudinally; wherein the first take-up and pay-off mechanism (32) is provided at an upper part of the first longitudinal back plate (25); and the second take-up and pay-off mechanism (33) is provided at an upper part of the second longitudinal back plate (26); wherein an outgoing point A of the wire arranging wheel (323), an incoming point B of the tension wheel (325), an outgoing point C of the tension wheel (325), and an incoming point D of the wire incoming and outgoing wheel (327) are coplanar; and the diamond wire located between an outgoing point E of the wire incoming and outgoing wheel (327) and an incoming point of the first main guide wheel (34) is perpendicular to an axis of the first main guide wheel (34) or an axis of the second main guide wheel (35); and one end of the diamond wire (31) is connected to the take-up and pay-off wheel (321), wound around the wire arranging wheel (323), the tension wheel (325), and the wire incoming and outgoing wheel (327) sequentially, and connected to the corresponding main guide wheels;
wherein the first take-up and pay-off mechanism (32) and the second take-up and pay-off mechanism (33) are respectively connected to two ends of the diamond wire (31); the one end of the diamond wire (31) is paid off from the first take-up and pay-off mechanism (32), led in from the first main guide wheel (34), wound around the first main guide wheel (34), the second main guide wheel (35), the third main guide wheel (36), and the fourth main guide wheel (37) sequentially, and led out from the second main guide wheel (35), forming an upper leading-in and upper leading-out structure;
wherein the wiring mechanism (328) comprises a longitudinal screw (3281) and a longitudinal guide rod (3282) that extend longitudinally, a sliding plate (3283) threaded with the longitudinal screw (3281) and slidably fitted with the longitudinal guide rod (3282), and a screw driving component (3284) for driving the longitudinal screw (3281) to rotate; and the wire incoming and outgoing wheel (327) is rotatably provided on the sliding plate (3283);
wherein the sliding plate (3283) is provided with an arc-shaped adjustment hole (32831) that vertically penetrates the sliding plate (3283) in parallel with the longitudinal screw (3281) and extends in an arc shape on the sliding plate (3283); a center line of the arc-shaped adjustment hole (32831) is parallel to an extension direction of the longitudinal screw (3281); the wire incoming and outgoing wheel (327) is rotatably connected to a connecting plate (3285), with a rotation center line perpendicular to the extension direction of the longitudinal screw (3281); and the connecting plate (3285) is adjustably fixed to the sliding plate (3283) through a bolt inserted into the arc-shaped adjustment hole (32831).

2. The multi-wire cutting machine according to claim 1, wherein the first main guide wheel (34), the second main guide wheel (35), the third main guide wheel (36), and the fourth main guide wheel (37) each comprise a guide wheel body (c1); two axial ends of the guide wheel body (c1) are coaxially fixedly provided therein with plugs (c3, c4) for connecting a main bearing box (d) or an auxiliary bearing box (e); the guide wheel body (c1) is preinstalled with receiving chambers (c13, c14) at an axial side of the two plugs (c3, c4); an axial end of the main bearing box (d) and an axial end of the auxiliary bearing box (e) can be partially plugged into the two corresponding receiving chambers (c13, c14); and connecting gaps (f) located at relative movement points between main shafts (d1, e1) of the main bearing box and the auxiliary bearing box and front end covers close to the centering plugs (c3, c4) are accommodated in the two receiving chambers (c13, c14), respectively.

## Patentansprüche

1. Vier-Säulen- und Vier-Führungsrad-Hubtyp-Mehrdraht-Schneidemaschine für eine großformatige Steinplatte, umfassend eine Basis (1) und eine Schneidvorrichtung, wobei die Schneidvorrichtung einen Rahmen (2) umfasst, wobei der Rahmen (2) auf der Basis (1) angeordnet ist und mit einer Schneidanordnung (3) versehen ist; die Schneidanordnung (3) umfasst einen Diamantdraht (31), ein erstes Hauptführungsrad (34), ein zweites Hauptführungsrad (35), ein drittes Hauptführungsrad (36) und ein viertes Hauptführungsrad (37); die vier Hauptführungsräder erstrecken sich in Längsrichtung in horizontaler Richtung, wobei jeweilige axiale Enden drehbar mit dem Rahmen (2) verbunden sind; das erste Hauptführungsrad (34) und das zweite Hauptführungsrad (35) sind auf gleicher Höhe angeordnet, und das dritte Hauptführungsrad (36) und das vierte Hauptführungsrad (37) sind auf gleicher Höhe angeordnet; das erste Hauptführungsrad (34) und das zweite Hauptführungsrad (35) sind jeweils oberhalb des vierten Hauptführungsrads (37) bzw. des dritten Hauptführungsrads (36) angeordnet; und der Diamantdraht (31) ist wiederholt um die vier Hauptführungsräder gewickelt, um zwischen Unterseiten des dritten Hauptführungsrads (36) und des vierten Hauptführungsrads (37) eine erste Schneidnetzfläche zum Schneiden eines Steins zu bilden, umfassend mehrere parallele und beabstandete Schneiddrähte; wobei der Rahmen (2) eine erste Säule (21), eine zweite Säule (22), eine dritte Säule (23) und eine vierte Säule (24) umfasst; die erste Säule (21) und die zweite Säule (22) sind jeweils an zwei Längsenden einer Querseite angeordnet, während die dritte Säule (23) und die vierte Säule (24) jeweils an zwei Längsenden der anderen Querseite angeordnet sind;
wobei ein erster Querträger (27) fest zwischen der ersten Säule (21) und der vierten Säule (24) verbunden ist, und ein zweiter Querträger (28) fest zwischen der zweiten Säule (22) und der dritten Säule (23) verbunden ist; wobei die axialen Enden des ersten Hauptführungsrads (34) und des vierten Hauptführungsrads (37) jeweils drehbar mit der ersten Säule (21) bzw. der zweiten Säule (22) verbunden sind, und die axialen Enden des zweiten Hauptführungsrads (35) und des dritten Hauptführungsrads (36) jeweils drehbar mit der dritten Säule (23) bzw. der vierten Säule (24) verbunden sind; und
**dadurch gekennzeichnet, dass** die Basis (1) mit einem Hubmechanismus (4) versehen ist, der unterhalb der Schneidanordnung (3) angeordnet und beweglich ist, um den durch die Schneidanordnung (3) zu schneidenden Stein anzuheben; dass eine erste Längs-Rückplatte (25), die außerhalb der ersten Säule (21) und der zweiten Säule (22) angeordnet ist, fest zwischen der ersten Säule (21) und der zweiten Säule (22) verbunden ist; dass eine zweite Längs-Rückplatte (26), die außerhalb der dritten Säule (23) und der vierten Säule (24) angeordnet ist, fest zwischen der dritten Säule (23) und der vierten Säule (24) verbunden ist; und dass die Schneidanordnung (3) ferner einen ersten Auf- und Abwickelmechanismus (32), einen zweiten Auf- und Abwickelmechanismus (33) und Führungsrad-Antriebsmechanismen (38) umfasst, wobei die Führungsrad-Antriebsmechanismen (38) jeweils mit den vier Hauptführungsrädern verbunden sind, um die Hauptführungsräder zum Drehen anzutreiben; der erste Auf- und Abwickelmechanismus (32) ist an einer Querseite des Rahmens (2) angeordnet, und der zweite Auf- und Abwickelmechanismus (33) ist an der anderen Querseite des Rahmens (2) angeordnet; der erste Auf- und Abwickelmechanismus (32) und der zweite Auf- und Abwickelmechanismus (33) umfassen jeweils ein Auf- und Abwickelrad (321), eine Rad-Antriebskomponente (322) zum Antreiben des Auf- und Abwickelrads (321) zum Drehen, ein Drahtanordnungsrad (323), das an einer Seite des Auf- und Abwickelrads (321) angeordnet ist, eine Drahtanordnungsvorrichtung (324) zum Antreiben des Drahtanordnungsrads (323) zur Bewegung in Längsrichtung, ein Spannrad (325), das an einer Längsseite des Drahtanordnungsrads (323) angeordnet ist, eine Spann-Einstellvorrichtung (326) zum Antreiben des Spannrads (325) zur Bewegung, ein Draht-Ein- und -Auslaufrad (327), das oberhalb des Drahtanordnungsrads (323) angeordnet ist, und einen Verdrahtungsmechanismus (328) zum Antreiben des Draht-Ein- und -Auslaufrads (327) zur Bewegung in Längsrichtung; wobei der erste Auf- und Abwickelmechanismus (32) an einem oberen Teil der ersten Längs-Rückplatte (25) vorgesehen ist; und der zweite Auf- und Abwickelmechanismus (33) an einem oberen Teil der zweiten Längs-Rückplatte (26) vorgesehen ist; wobei ein Auslaufpunkt A des Drahtanordnungsrads (323), ein Einlaufpunkt B des Spannrads (325), ein Auslaufpunkt C des Spannrads (325) und ein Einlaufpunkt D des Draht-Ein- und -Auslaufrads (327) koplanar sind; und der Diamantdraht zwischen einem Auslaufpunkt E des Draht-Ein- und -Auslaufrads (327) und einem Einlaufpunkt des ersten Hauptführungsrads (34) senkrecht zu einer Achse des ersten Hauptführungsrads (34) oder einer Achse des zweiten Hauptführungsrads (35) ist; und ein Ende des Diamantdrahts (31) mit dem Auf- und Abwickelrad (321) verbunden ist, nacheinander um das Drahtanordnungsrad (323), das Spannrad (325) und das Draht-Ein- und -Auslaufrad (327) gewickelt ist und mit den entsprechenden Hauptführungsrädern verbunden ist;
wobei der erste Auf- und Abwickelmechanismus (32) und der zweite Auf- und Abwickelmechanismus (33) jeweils mit einem der zwei Enden des Diamantdrahts (31) verbunden sind; das eine Ende des Diamantdrahts (31) wird von dem ersten Auf- und Abwickelmechanismus (32) abgewickelt, von dem ersten Hauptführungsrad (34) eingeführt, nacheinander um das erste Hauptführungsrad (34), das zweite Hauptführungsrad (35), das dritte Hauptführungsrad (36) und das vierte Hauptführungsrad (37) gewickelt und von dem zweiten Hauptführungsrad (35) ausgeführt, wodurch eine obere Einführ- und obere Ausftihrstruktur gebildet wird;
wobei der Verdrahtungsmechanismus (328) eine Längsschraube (3281) und eine Längsführungsstange (3282) umfasst, die sich in Längsrichtung erstrecken, eine Gleitplatte (3283), die mit der Längsschraube (3281) verschraubt ist und gleitend mit der Längsführungsstange (3282) zusammenpasst, und eine Schrauben-Antriebskomponente (3284) zum Antreiben der Längsschraube (3281) zum Drehen; und das Draht-Ein- und -Auslaufrad (327) drehbar auf der Gleitplatte (3283) vorgesehen ist;
wobei die Gleitplatte (3283) mit einem bogenförmigen Einstellloch (32831) versehen ist, das die Gleitplatte (3283) vertikal durchdringt, parallel zur Längsschraube (3281) verläuft und sich in bogenförmiger Form auf der Gleitplatte (3283) erstreckt; eine Mittellinie des bogenförmigen Einstelllochs (32831) parallel zu einer Erstreckungsrichtung der Längsschraube (3281) ist; das Draht-Ein- und -Auslaufrad (327) drehbar mit einer Verbindungsplatte (3285) verbunden ist, mit einer Drehmittelachse senkrecht zur Erstreckungsrichtung der Längsschraube (3281); und die Verbindungsplatte (3285) einstellbar über einen in das bogenförmige Einstellloch (32831) eingesetzten Bolzen an der Gleitplatte (3283) befestigt ist.

2. Mehrdraht-Schneidemaschine nach Anspruch 1, wobei das erste Hauptführungsrad (34), das zweite Hauptführungsrad (35), das dritte Hauptführungsrad (36) und das vierte Hauptführungsrad (37) jeweils einen Führungsradkörper (c1) umfassen; zwei axiale Enden des Führungsradkörpers (c1) sind koaxial fest darin mit Stopfen (c3, c4) zum Verbinden eines Hauptlagerkastens (d) oder eines Hilfslagerkastens (e) versehen; der Führungsradkörper (c1) ist an einer axialen Seite der beiden Stopfen (c3, c4) mit Aufnahmekammern (c13, c14) vorinstalliert; ein axiales Ende des Hauptlagerkastens (d) und ein axiales Ende des Hilfslagerkastens (e) können teilweise in die zwei entsprechenden Aufnahmekammern (c13, c14) eingesteckt werden; und Verbindungsspalte (f), die an relativen Bewegungsstellen zwischen Hauptwellen (d1, e1) des Hauptlagerkastens und des Hilfslagerkastens und vorderen Endabdeckungen nahe den Zentrierstopfen (c3, c4) angeordnet sind, sind jeweils in den zwei entsprechenden Aufnahmekammern (c13, c14) aufgenommen.

## Revendications

1. Machine de coupe multifilaire de type à levage avec quatre piliers et quatre roues de guidage pour dalle de pierre de grande taille, comprenant une base (1) et un dispositif de coupe, dans laquelle le dispositif de coupe comprend un bâti (2), dans laquelle le bâti (2) est situé sur la base (1) et est pourvu d'un ensemble de coupe (3) ; l'ensemble de coupe (3) comprend un fil diamanté (31), une première roue de guidage principale (34), une deuxième roue de guidage principale (35), une troisième roue de guidage principale (36) et une quatrième roue de guidage principale (37) ; les quatre roues de guidage principales s'étendent longitudinalement dans la direction horizontale, avec des extrémités axiales respectives reliées de manière rotative au bâti (2) ; la première roue de guidage principale (34) et la deuxième roue de guidage principale (35) sont situées à la même hauteur, et la troisième roue de guidage principale (36) et la quatrième roue de guidage principale (37) sont situées à la même hauteur ; la première roue de guidage principale (34) et la deuxième roue de guidage principale (35) sont situées au-dessus de la quatrième roue de guidage principale (37) et de la troisième roue de guidage principale (36), respectivement ; et le fil diamanté (31) est enroulé répétitivement autour des quatre roues de guidage principales pour former une première surface maillée de coupe pour couper une pierre, comprenant de multiples fils de coupe parallèles et espacés, entre des fonds de la troisième roue de guidage principale (36) et de la quatrième roue de guidage principale (37) ; dans laquelle le bâti (2) comprend un premier pilier (21), un deuxième pilier (22), un troisième pilier (23) et un quatrième pilier (24) ; le premier pilier (21) et le deuxième pilier (22) sont respectivement situés au niveau de deux extrémités longitudinales d'un côté transversal, alors que le troisième pilier (23) et le quatrième pilier (24) sont respectivement situés au niveau de deux extrémités longitudinales de l'autre côté transversal ;
dans laquelle une première traverse (27) est reliée de manière fixe entre le premier pilier (21) et le quatrième pilier (24), et une deuxième traverse (28) est reliée de manière fixe entre le deuxième pilier (22) et le troisième pilier (23) ; dans laquelle les extrémités axiales de la première roue de guidage principale (34) et de la quatrième roue de guidage principale (37) sont reliées de manière rotative au premier pilier (21) et au deuxième pilier (22), respectivement, et les extrémités axiales de la deuxième roue de guidage principale (35) et de la troisième roue de guidage principale (36) sont reliées de manière rotative au troisième pilier (23) et au quatrième pilier (24), respectivement ; et
**caractérisée en ce que** la base (1) est pourvue d'un mécanisme de levage (4) situé au-dessous de l'ensemble de coupe (3) et mobile pour soulever la pierre à couper par l'ensemble de coupe (3) ; **en ce qu'**une première plaque arrière longitudinale (25) située en dehors du premier pilier (21) et du deuxième pilier (22) est reliée de manière fixe entre le premier pilier (21) et le deuxième pilier (22) ; **en ce qu'**une deuxième plaque arrière longitudinale (26) située en dehors du troisième pilier (23) et du quatrième pilier (24) est reliée de manière fixe entre le troisième pilier (23) et le quatrième pilier (24) ; et **en ce que** l'ensemble de coupe (3) comprend en outre un premier mécanisme d'enroulement et de déroulement (32), un deuxième mécanisme d'enroulement et de déroulement (33) et des mécanismes d'entraînement de roue de guidage (38), dans laquelle les mécanismes d'entraînement de roue de guidage (38) sont reliés aux quatre roues de guidage principales respectivement pour entraîner les roues de guidage principales en rotation ; le premier mécanisme d'enroulement et de déroulement (32) est situé sur un côté transversal du bâti (2), et le deuxième mécanisme d'enroulement et de déroulement (33) est situé sur l'autre côté transversal du bâti (2) ; chacun du premier mécanisme d'enroulement et de déroulement (32) et du deuxième mécanisme d'enroulement et de déroulement (33) comprend une roue d'enroulement et de déroulement (321), un composant d'entraînement de roue (322) pour entraîner la roue d'enroulement et de déroulement (321) en rotation, une roue d'agencement de fil (323) située sur un côté de la roue d'enroulement et de déroulement (321), un dispositif d'agencement de fil (324) pour entraîner la roue d'agencement de fil (323) en mouvement longitudinal, une roue de tension (325) située sur un côté longitudinal de la roue d'agencement de fil (323), un dispositif de réglage de tension (326) pour entraîner la roue de tension (325) en mouvement, une roue d'entrée et de sortie de fil (327) située au-dessus de la roue d'agencement de fil (323), et un mécanisme de filage (328) pour entraîner la roue d'entrée et de sortie de fil (327) en mouvement longitudinal ; dans laquelle le premier mécanisme d'enroulement et de déroulement (32) est aménagé au niveau d'une partie supérieure de la première plaque arrière longitudinale (25) ; et le deuxième mécanisme d'enroulement et de déroulement (33) est aménagé au niveau d'une partie supérieure de la deuxième plaque arrière longitudinale (26) ; dans laquelle un point de sortie A de la roue d'agencement de fil (323), un point d'entrée B de la roue de tension (325), un point de sortie C de la roue de tension (325), et un point d'entrée D de la roue d'entrée et de sortie de fil (327) sont coplanaires ; et le fil diamanté situé entre un point de sortie E de la roue d'entrée et de sortie de fil (327) et un point d'entrée de la première roue de guidage principale (34) est perpendiculaire à un axe de la première roue de guidage principale (34) ou à un axe de la deuxième roue de guidage principale (35) ; et une extrémité du fil diamanté (31) est reliée à la roue d'enroulement et de déroulement (321), enroulée en séquence autour de la roue d'agencement de fil (323), de la roue de tension (325), et de la roue d'entrée et de sortie de fil (327), et reliée aux roues de guidage principales correspondantes ;
dans laquelle le premier mécanisme d'enroulement et de déroulement (32) et le deuxième mécanisme d'enroulement et de déroulement (33) sont respectivement reliés à deux extrémités du fil diamanté (31) ; l'extrémité du fil diamanté (31) est déroulée du premier mécanisme d'enroulement et de déroulement (32), amenée en entrée de la première roue de guidage principale (34), enroulée en séquence autour de la première roue de guidage principale (34), de la deuxième roue de guidage principale (35), de la troisième roue de guidage principale (36) et de la quatrième roue de guidage principale (37), et amenée en sortie de la deuxième roue de guidage principale (35), formant une structure d'entrée supérieure et de sortie supérieure ;
dans laquelle le mécanisme de filage (328) comprend une vis longitudinale (3281) et une tige de guidage longitudinale (3282) qui s'étendent longitudinalement, une plaque coulissante (3283) filetée avec la vis longitudinale (3281) et ajustée de manière coulissante avec la tige de guidage longitudinale (3282), et un composant d'entraînement de vis (3284) pour entraîner la vis longitudinale (3281) en rotation ; et la roue d'entrée et de sortie de fil (327) est aménagée de manière rotative sur la plaque coulissante (3283) ;
dans laquelle la plaque coulissante (3283) est pourvue d'un trou de réglage en forme d'arc (32831) qui pénètre verticalement la plaque coulissante (3283) parallèlement à la vis longitudinale (3281) et s'étend en forme d'arc sur la plaque coulissante (3283) ; une ligne centrale du trou de réglage en forme d'arc (32831) est parallèle à une direction d'extension de la vis longitudinale (3281) ; la roue d'entrée et de sortie de fil (327) est reliée de manière rotative à une plaque de liaison (3285), avec une ligne centrale de rotation perpendiculaire à la direction d'extension de la vis longitudinale (3281) ; et la plaque de liaison (3285) est fixée de manière réglable à la plaque coulissante (3283) à travers un boulon inséré dans le trou de réglage en forme d'arc (32831).

2. Machine de coupe multifilaire selon la revendication 1, dans laquelle chacune de la première roue de guidage principale (34), de la deuxième roue de guidage principale (35), de la troisième roue de guidage principale (36) et de la quatrième roue de guidage principale (37) comprend un corps de roue de guidage (c1) ; deux extrémités axiales du corps de roue de guidage (c1) sont ménagées de manière coaxiale à l'intérieur de celui-ci avec des bouchons (c3, c4) pour relier un boîtier de palier principal (d) ou un boîtier de palier auxiliaire (e) ; le corps de roue de guidage (c1) est pré-installé avec des chambres de réception (c13, c14) au niveau d'un côté axial des deux bouchons (c3, c4) ; une extrémité axiale du boîtier de palier principal (d) et une extrémité axiale du boîtier de palier auxiliaire (e) peuvent être partiellement insérées dans les deux chambres de réception correspondantes (c13, c14) ; et des espaces de liaison (f) situés au niveau de points de mouvement relatif entre des arbres principaux (d1, e1) du boîtier de palier principal et du boîtier de palier auxiliaire et des couvercles d'extrémité avant proches des bouchons de centrage (c3, c4) sont aménagés dans les deux chambres de réception (c13, c14), respectivement.
